(19) Europäisches Patentamt
European Patent Office
Office européen des brevets

(11) **EP 0 991 918 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(21) Anmeldenummer: **98937532.4**

(22) Anmeldetag: **22.06.1998**

(51) Int Cl.$^7$: **G01D 5/347**, G01B 11/02

(86) Internationale Anmeldenummer:
**PCT/EP98/03798**

(87) Internationale Veröffentlichungsnummer:
**WO 99/000645 (07.01.1999 Gazette 1999/01)**

(54) **VERFAHREN ZUM BESTIMMEN DER ABSOLUTEN WINKELSTELLUNG DES LENKRADES EINES KRAFTFAHRZEUGES SOWIE OPTOELEKTRONISCHER LENKWINKELSENSOR**

METHOD FOR DETERMINING THE ABSOLUTE ANGULAR POSITION OF THE STEERING WHEEL OF A MOTOR VEHICLE, AND OPTOELECTRONIC STEERING ANGLE SENSOR

PROCEDE DE DETERMINATION DE LA POSITION ANGULAIRE ABSOLUE DU VOLANT DE DIRECTION D'UN VEHICULE A MOTEUR ET CAPTEUR DE L'ANGLE DE BRAQUAGE OPTOELECTRONIQUE

(84) Benannte Vertragsstaaten:
**DE ES FR GB IT**

(30) Priorität: **28.06.1997 DE 19727572**

(43) Veröffentlichungstag der Anmeldung:
**12.04.2000 Patentblatt 2000/15**

(73) Patentinhaber: **Leopold Kostal GmbH & Co. KG**
**58507 Lüdenscheid (DE)**

(72) Erfinder: **BLÄSING, Frank**
**D-59457 Werl (DE)**

(74) Vertreter: **Haverkamp, Jens**
**Schröter & Haverkamp,**
**Patentanwälte,**
**Im Tückwinkel 22**
**58636 Iserlohn (DE)**

(56) Entgegenhaltungen:
**DE-C- 19 500 817          US-A- 4 650 335**

• **PATENT ABSTRACTS OF JAPAN vol. 6, no. 212 (P-151) [1090], 26. Oktober 1982 & JP 57 119215 A (TATEISHI DENKI K.K.), 24. Juli 1982**

## Beschreibung

Die Erfindung betrifft das Gebiet optoelektronischer Lenkwinkelerfassungssysteme. Insbesondere betrifft die Erfindung ein Verfahren zum Bestimmen der absoluten Winkelstellung des Lenkrades eines Kraftfahrzeuges innerhalb eines Segmentes von 360° unter Verwendung eines optoelektronischen Lenkwinkelsensors mit den in den Oberbegriffen der Ansprüche 1, 5 und 8 angegebenen Schritten.

Femer betrifft die Erfindungen einen optoelektronischen Lenkwinkelsensor entsprechend den Merkmalen des Oberbegriffes des Anspruchs 8.

Der Lenkwinkel bzw. der Lenkwinkeleinschlag bei Kraftfahrzeugen wird benötigt, um mit diesem Wert etwa ein Fahrdynamikregelsystem beaufschlagen zu können. Ein solches Fahrdynamikregelsystem erhält neben dem genannten Lenkwinkelwerten weitere Meßdaten, etwa die Raddrehzahl oder die Drehung des Kraftfahrzeuges um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern der Aktoren, beispielsweise der Bremsen und/oder das Motormanagement umgesetzt werden können.

Ein optoelektronischer Lenkwinkelsensor ist beispielsweise aus der DE 40 22 837 A1 bekannt. Der in diesem Dokument offenbarte Lenkwinkelsensor besteht aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor ist eine CCD-Sensorzeile vorgesehen. Der Codegeber ist als Lichtschlitzscheibe ausgebildet und umfaßt als Codespur eine sich von innen nach außen vergrößemde Spirale. Über die Belichtung der Bildpunkte des Zeilensensors bei einem bestimmten Lenkeinschlag kann ein Aufschluß über den tatsächlichen Lenkwinkeleinschlag gewonnen werden.

Damit die gewonnenen Lenkwinkeldaten zur Weiterverarbeitung als Eingangsgröße eines Fahrdynamikregelsystems verwendet werden können, müssen diese einen hohen Genauigkeitsgrad und eine möglichst hohe Auflösung haben. Diesen gewünschten Anforderungen kann der aus der DE 40 22 837 A1 bekannte Lenkwinkelsensor bzw. das darin offenbarte Verfahren nicht genügen. Da die Codescheibe drehfest an der Lenkspindel angeordnet ist und der Zeilensensor bezüglich der Drehbewegung der Codescheibe ortsfest und somit nicht an der Lenkspindel befestigt vorgesehen ist, werden Bewegungen der Lenkspindel, mit der diese in Richtungen senkrecht zur Längsachse bewegt wird, durch die entsprechende Bewegung der Codescheibe und der damit einhergehenden Bewegung der auf dem Zeilensensor abgebildeten Codespur als Änderung des Lenkwinkeleinschlages erfaßt. Entsprechend wird auch das Fahrdynamikregelsystem mit einer solchen Fehlinformation beaufschlagt.

Die Meßgenauigkeit des vorbekannten Lenkwinkelsensors ist durch die Genauigkeit und die Feinheit der verwendeten Codespur sowie durch die Abbildungsschärfe der Lichtspur der Codescheibe auf dem Zeilensensor bestimmt. Zur Erzielung einer möglichst guten Abbildungsschärfe verwendet der vorbekannte Lenkwinkelsensor eine langgestreckte Lichtquelle, etwa ein Line-Source-LED oder eine längsförmige Lichtquelle, wobei die Länge dieser Lichtquellen der Länge der verwendeten Sensorzeile entspricht. Die emittierten Lichtstrahlen sollen möglichst rechtwinklig auf die Oberfläche des Codegebers auftreffen. Durch diese Maßnahme ist man bestrebt, einen möglichst sprunghaften Hell-Dunkel-Übergang zu schaffen, um exakte Lagebestimmungen der Lichtspur auf dem Zeilensensor vornehmen zu können. Diese Anforderungen bedingen eine hochexakte Montage und Justage der Codescheibe bezüglich der Lichtquelle und dem Zeilensensor. Die erreichbare Auflösung auch bei Verwendung einer hochpräzisen Codespur entspricht der physikalischen Auflösung des Zeilensensors. Daher kann die Auflösung eines derartigen Lenkwinkelsensors lediglich dadurch gesteigert werden, daß ein Zeilensensor mit einem extrem hohen Bildpunktanzahl und eine Codespur mit einer sehr präzisen Linie verwendet wird. Diese genannten Maßnahmen erfordern jedoch einen erheblichen Aufwand und stellen sehr hohe Anforderungen an die einzuhaltenden Toleranzen.

Aus JP-A 57 119 215 ist ein Verfahren und eine Vorrichtung zum Bestimmen der absoluten Winkelstellung des Lenkrades eines Kraftfahrzeuges unter Verwendung eines optoelektronischen Lenkwinkelsensors bekannt geworden. Von der Lichtquelle wird eine Referenzspur und eine Abtastspur beleuchtet, die gemeinsam auf einem photosensitiven Zeilensensor abgebildet werden. Der Abstand zwischen den Abbildungen der Referenzspur und der Abtastspur in einer bestimmten Stellung des Lenkrades wird als Maß der absoluten Winkelstellung verwendet. Zu diesem Zweck ist die Referenzlinie kreisförmig und die Abtastlinie nach Art einer eingängigen Spirale aufgebaut. Jede Stellung der Geberscheibe innerhalb des 360°-Segmentes ist damit durch einen unterschiedlichen Abstand zwischen der Abtastlinie und der Referenzlinie gekennzeichnet. Nachteilig ist bei dem aus diesem Dokument vorbekannten Verfahren und Gegenstand, daß das Auflösungsvermögen abhängig ist von dem Auflösungsvermögen des eingesetzten Zeilensensors. Dieses Auflösungsvermögen ist jedoch im Hinblick auf einen Einsatz einer solchen Drehwinkelerfassungseinrichtung als Lenkwinkelsensor bei Kraftfahrzeugen nicht hoch genug, um den im Automotivebereich gestellten Anforderungen an einen solchen Lenkwinkelsensor gerecht zu werden. Detektiert wird bei diesem vorbekannten Verfahren der Hell-Dunkel-Übergang, der sich regelmäßig über mehrere Bildpunkte eines Zeilensensors erstreckt. Um ein möglichst hohes Auflösungsvermögen bereitstellen zu können, ist man bestrebt, bei diesem vorbekannten Verfahren und bei der entsprechend vorbekannten Vorrichtung die Hell-Dunkel-Übergänge so scharf wie möglich auf der photosensitiven Oberfläche des Zeilensensors abzubilden, damit möglichst wenige Bildpunkte sich gleichzeitig in diesem Übergangsbereich befinden. Dies ist jedoch sehr aufwendig.

Ausgehend von diesem zuletzt diskutierten Stand der Technik liegt der Erfindung daher die Aufgabe zugrunde, ein eingangs genanntes Verfahren und eine eingangs genannte Vorrichtung dergestalt weiter zu bilden, daß der Abstand zwischen den Abbildungen der Referenzlinie und der Abtastlinie trotz der unvermeidbaren Unschärfe durch die Hell-Dunkel-Übergänge möglichst präzise determiniert werden kann.

Die verfahrensbezogene Aufgabe wird erfindungsgemäß gelöst durch Verfahren, wie sie in den Ansprüchen 1, 5 und 8 wiedergegeben sind.

Die vorrichtungsbezogene Aufgabe wird erfindungsgemäß durch einen optoelektronischen Lenkwinkelsensor mit den Merkmalen des Anspruchs 10 gelöst.

Der erfindungsgemäße Lenkwinkelsensor verwendet im Gegensatz zum vorbekannten Stand der Technik die fast unvermeidbare Unschärfe der sich über einige Bildpunkte erstreckenden Hell-Dunkel-Übergänge der erfaßten Codespuren zur Bestimmung der tatsächlichen bzw. angenäherten Lage der Lichtspurkante. Diese Maßnahme hat zum Vorteil, daß die Anforderungen an die Bauelementanordnung und an die Lichtquelle nur gering sind. Vielmehr ist es sinnvoll, einen Hell-Dunkel-Übergangsbereich vorzusehen, der sich über mehrere Bildpunkte erstreckt, um aus den diskreten Signalen der von der Codespur bestrahlten Bildpunkte, im Folgenden als Signalcluster bezeichnet, ein bestimmtes Charakteristikum zur Lenkwinkelbestimmung zu verwenden.

Der Codegeber trägt erfindungsgemäß eine Abtastlinie und eine Referenzlinie, wobei der Abstand zwischen der Abtastlinie und der Referenzlinie in dem den Lenkwinkel zu erfassenden Segment von 360° in jedem Punkt unterschiedlich ist. Daher kann der Abstand jeweils gleicher Charakteristika der Signalcluster der Abtastlichtspur und der Referenzlichtspur zur absoluten Lenkwinkelbestimmung verwendet werden. Durch die Abstandsbestimmung erfolgt die Lenkwinkelbestimmung jeweils in Relation dieser beiden Lichtspuren zueinander, so daß Bewegungen der Lenkspindel, die diese aus ihrer normalen Drehachse in Längsrichtung des Zeilensensors herausbewegen, kompensiert werden. Die Abstandsbestimmung erfolgt in Subpixelgenauigkeit.

Bei dem erfindungsgemäßen Lenkwinkelsensor kann als Abtastlinie und als Referenzlinie entweder eine Lichtspur vorgesehen sein, so daß der Codegeber beispielsweise als Lichtschlitzscheibe ausgebildet ist, oder aber eine Dunkelspur auf einer ansonsten hellen, etwa transparenten Codespur vorgesehen sein.

Es ist vorgesehen, die Unschärfe in der Abbildung der Lichtspuren zur Berechnung einer Interpolationskurve oder eines Interpolationspolynoms im Bereich von einer oder von beiden Signalflanken der beiden Lichtspuren zu benutzen. Durch die Interpolation wird ein quasi analoges Signal auf einer kontinuierlichen Kurve erzeugt. Durch einen dem Interpolator nachgeschalteten Vergleicher erfolgt anschließend ein Abgleich des interpolierten Signals mit einem vorbestimmten Schwellwert. Der auf diese Weise ermittelte Wert erlaubt sodann eine genauere Positionsbestimmung, nämlich eine solche im Subpixelbereich. Das Ausgangssignal des Vergleichers ist ein hochaufgelöstes Sprungsignal, welches eine Auswertlogik beaufschlagt. Durch eine entsprechende Überabtastung, wobei beispielsweise eine 16-fache Überabtastung vorgesehen sein kann, ist eine Abtastung der Codescheibe in einer der Taktrate der Überabtastung entsprechenden Schrittanzahl, beispielsweise in 16 Subpixelschritten je Bildpunkt, möglich. Die Auflösung bei einem Kreissegment von 360° und bei einer 16-fachen Überabtastung führt bei Verwendung einer 128 Pixel-Zeilensensor zu einer effektiven Auflösung von etwa 1600 Schritten, mit anderen Worten: zu einer Auflösung von 0,225 Grad je Subpixelwert. Die verfahrensimmanente lokale Linearitätsabweichung liegt bei dieser Anordnung im Bereich ±3 Subpixelschritte (entspricht ±0,7°) aufgrund des Interpolationsfehlers.

Vorteilhafterweise erstreckt sich der Hell-Dunkel-Übergang einer Lichtspur zwischen 10 - 90 % des Überganges über 3 -10 Pixel. Besonders bevorzugt erstreckt sich der genannte Hell-Dunkel-Übergang über 5 - 7 Pixel. Wird eine geringere Pixelanzahl verwendet, ist der Interpolationsfehler entsprechend größer. Bei einer Verwendung einer größeren Pixelanzahl mag zwar zunächst die Interpolationsgenauigkeit verbessert sein, jedoch verringert sich dann der örtliche Verschiebungsbereich der Abtastlinie, so daß die effektive Auflösung des Verfahrens nicht entsprechend ansteigt.

Der Abgleich des interpolierten Signals erfolgt zweckmäßigerweise in Abhängigkeit von dem Referenzliniensignal, wobei die maximale Helligkeit der Referenzlichtlinie die Bezugsgröße darstellt. Der Schwellwert beträgt in einem Ausführungsbeispiel 50 % der maximalen Helligkeit der Referenzlichtspur.

Der Zeilensensor und die Auswertelogik werden vorteilhafterweise von ein und demselben Taktgeber getriggert, so daß beide Elemente Pixel-synchron getaktet sind.

Gemäß einem weiteren Ausführungsbeispiel zur Abstandsbestimmung bestimmter Signalcharakteristika ist vorgesehen, beide Flanken der Signalcluster der Abtastlichtspur und der Referenzlichtspur in der oben dargestellten Art und Weise auszuwerten und anschließend aus den bestimmten Flanken einen Mittelwert zu bilden. Zur Abstandsbestimmung wird der Abstand der beiden Mittelwerte zueinander ermittelt. In einer solchen Ausgestaltung wird das durch eine Abstandsänderung des Codegebers zum Zeilensensor hervorgerufene "Pumpen" der Signalcluster bzw. der Lichtspuren kompensiert.

Gemäß einem weiteren Ausführungsbeispiel zur subpixelgenauen Abstandsbestimmung der Abtastlichtspur und der Referenzlichtspur wird in einem ersten Schritt die pixelbezogene Lage der Signalcluster der beiden Lichtspuren ermittelt. Anschließend werden die Signalcluster mit einem vorbestimmten Referenzimpuls zur Ermittlung etwa von Korrelationsfunktionen oder von quadratischen Fehlersummen miteinander verglichen. Bei diesen Vergleichen wird der Referenzimpuls schrittweise über das Signalcluster gefahren, wobei in jedem Schritt ein Korrelationkoeffizient bzw. eine quadratische Fehlersumme ermittelt wird. Die Schrittweite ist kleiner bemessen als die Erstreckung eines Bildpunktes. Die eigentliche Abstandsbestimmung erfolgt dann durch Bestimmen des Abstandes der beiden Extrema der jeweils ermittelten Funktionsabschnitte.

Bei einem Auswerteverfahren kann vorgesehen sein, daß zur Lagebestimmung der Signalcluster gemäß einer hierarchischen Suche in einem ersten Schritt die Sensorzeilensignale in größeren Schritten mit dem Referenzimpuls abgetastet werden. Ebenfalls kann vorgesehen sein, daß die Signalcluster durch Bestimmen der Signalclusterflanken der beiden Lichtspuren im Wege einer Bestimmung der oben beschriebenen Hell-Dunkel-Übergänge ermittelt werden.

Zur Abstandsbestimmung kann ebenfalls ein Schwerpunktbestimmungsverfahren verwendet werden, gemäß dem die Schwerpunkte der Signalcluster ermittelt werden und anschließend der Abstand der beiden Schwerpunkte voneinander ermittelt wird. Da die Schwerpunktbestimmung zu einer Lage der Schwerpunkte in Subpixelgenauigkeit führt, ist folglich auch der ermittelte Abstand der beiden Lichtspuren in einer Subpixelgenauigkeit bestimmbar.

In einem Ausführungsbeispiel ist vorgesehen, daß diametral dem ersten Zeilensensor gegenüberliegend ein zweiter lichtbeaufschlagter Zeilensensor zum Abtasten der Referenzlinie sowie der Abtastlinie angeordnet ist. Dieser Zeilensensor erfaßt ebenfalls die genannten Lichtspuren, so daß für einen zu erfassenden Drehwinkel zwei ermittelte Winkelwerte vorliegen. Mit Hilfe dieser beiden erfaßten Winkelwerte ist ein gemittelter Winkelwert berechenbar, der gegenüber dem Achsspiel des Codegebers in der Drehebene senkrecht zur Sensorlängsachse oder bezüglich der Exzentrizität des Codegebers kompensiert ist. Darüber hinaus bietet der Einsatz eines zweiten Zeilensensors einen hohen Schutz gegenüber Fehlern durch lokale optische Störungen, da zu jedem Zeitpunkt an zwei besonders weit voneinander entfernten Positionen auf dem Codegeber gemessen wird. Die Wahrscheinlichkeit, daß an beiden Meßorten eine lokale Störung vorliegt, ist äußerst gering, so daß auch die Ausfallwahrscheinlichkeit einer solchen Sensoranordnung erheblich reduziert ist.

Weitere Vorteile der Erfindung sowie Weiterbildungen sind Bestandteil der Unteransprüche sowie der nachfolgenden Beschreibung bevorzugter Ausführungsbeispiele. Es zeigen:

Fig. 1     eine schematische Darstellung eines optoelektronischen Lenkwinkelsensors,

Fig. 2     eine schematisierte Draufsicht auf den Lenkwinkelsensor in der Figur 1,

Fig. 3     ein Blockschaltbild zum Betreiben des in Figur 1 gezeigten Lenkwinkelsensors,

Fig. 4     ein Diagramm, welches die Signalverarbeitung des mit dem Zeilensensor des Lenkwinkelsensors abgetasteten Signales zeigt,

Fig. 5     ein Diagramm, aus dem sich der bei der Signalverarbeitung verwendete Interpolationsalgorithmus ergibt,

Fig. 6     ein Diagramm, welches die Subpixelauflösung des Lenkwinkelsensors bei einer 16-fachen Überabtastung innerhalb eines Pixels zeigt,

Fig. 7     eine schematische Draufsicht auf einen weiteren Lenkwinkelsensor,

Fig. 8     ein Diagramm darstellend einen Vergleich eines Signalclusters mit einem Referenzimpuls und

Fig. 9     in einem schematisierten Diagramm das Abtasten eines Signalclusters mit einem Referenzimpuls.

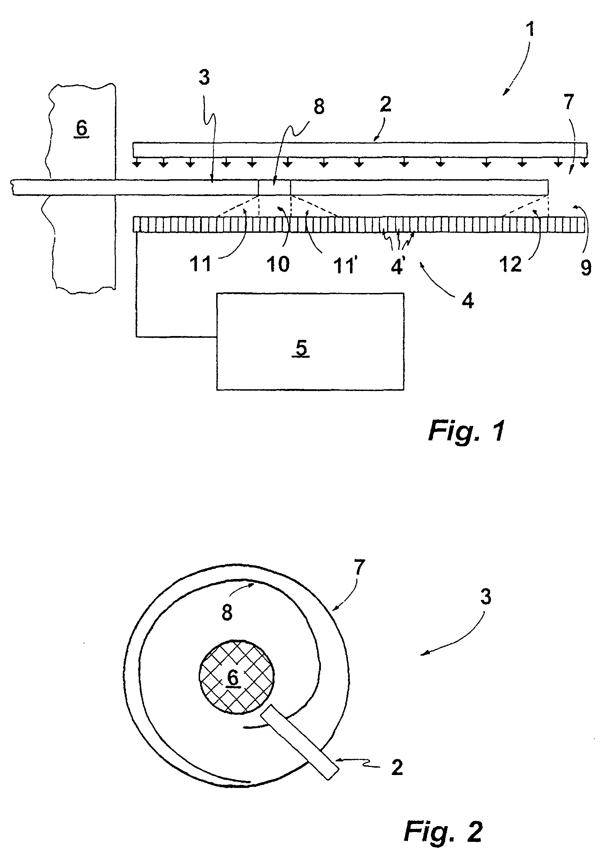

Figur 1 zeigt einen optoelektronischen Lenkwinkelsensor 1, der eine Lichtquelle 2, eine Codescheibe 3, einen Zeilensensor, nämlich eine CMOS-Sensorzeile 4 und eine Auswerteeinheit 5 umfaßt. Die CMOS-Sensorzeile 4 besteht aus einer Vielzahl nebeneinander angeordneter einzelner Bildpunkte (Pixel) 4'. Als Lichtquelle 2 ist bei dem in Figur 1 dargestellten Ausführungsbeispiel eine linienförmige, über die Sensorzeile 4 ausgedehnte Lichtquelle, welche an allen Punkten Licht mit einer Vorzugsrichtung ausstrahlt, vorgesehen.

Die Codescheibe 3 ist drehfest an einer Lenkspindel 6 angeordnet. Die Codescheibe 3 ist mit Ausnahme von zwei Lichtschlitzen 7, 8 lichtundurchlässig. Von den beiden Lichtschlitzen 7, 8 ist der Lichtschlitz 7 als Referenzlinie und der Lichtschlitz 8 als Abtastlinie vorgesehen. Die Referenzlinie 7 wird bei dem dargestellten Ausführungsbeispiel durch die äußere Kante der Codescheibe 3 gebildet, so daß diese in der Draufsicht konzentrisch die Lenkspindel 6 umgebend kreisrund ist. Es kann jedoch auch vorgesehen sein, daß die Referenzlichtlinie 7 als eigene konzentrische Durchbrechung (Schlitz) in die Codescheibe 3 eingebracht ist. Die Abtastlinie 8 ist, wie in Figur 2 ersichtlich, von innen nach außen größer werdend und über 360° angeordnet spiralförmig ausgebildet. Durch Abtasten des Abstandes zwischen der Lichtspur 9 der Referenzlinie 7 und der Lichtspur 10 der Abtastlinie 8 bzw. von daraus sich ergebenden Charakteristika ein Maß erhältlich, welches über 360° eindeutig den jeweiligen Lenkwinkeleinschlag wiedergibt. Dabei wird insbesondere aus der Draufsicht der Figur 2 deutlich, daß Toleranzen bezüglich der Zentrizität der Codescheibe 3 sich bei einer solchen Abstandsmessung nicht bemerkbar machen, da sich diese gleichermaßen auf die Referenzlinie 7 und die Abtastlinie 8 auswirken. Darüberhinaus ist auch bei einem Ausfall des Systems und bei einer neuen Inbetriebnahme durch die Eindeutigkeit der Zuordnung ein fehlerfreies Arbeiten des Systems möglich, ohne dieses vorher neu kalibrieren zu müssen.

Das von der Lichtquelle 2 emittierte Licht beleuchtet den gesamten Radius der Codescheibe 3 im Bereich der der CMOS-Sensorzeile 4 gegenüberliegenden Seite. Durch die Lichtschlitze von Referenzlinie 7 und Abtastlinie 8 werden deren Lichtspuren 9, 10 auf der CMOS-Sensorzeile 4 abgebildet. Die Lichtspuren 9, 10 werden sodann von bestimmten Bildpunkten 4' erfaßt. Bedingt durch den Abstand der CMOS-Sensorzeile 4 von der Codescheibe 3 und durch die Emission von nicht parallelem Licht aus der Lichtquelle 2 bildet sich die Kante der Referenzlinie 7 bzw. der Abtastlinie 8 unscharf ab. Es existiert daher zu jeder Lichtspur 9, 10 ein Hell-Dunkel-Übergangsbereich 11, 11', 12. Jeder Hell-Dunkel-Übergangsbereich 11, 11', 12 erstreckt sich über mehrere Bildpunkte 4'. Zur Abstandsbestimmung wird im folgenden der Abstand zwischen den Hell-Dunkel-Übergangsbereichen 11, 12 bestimmt. Diese Bestimmung und die Berechnung des sich daraus ergebenden Lenkwinkels erfolgt in der Auswerteeinheit 5, deren Eingang an den Ausgang des Zeilensensors 4 angeschlossen ist.

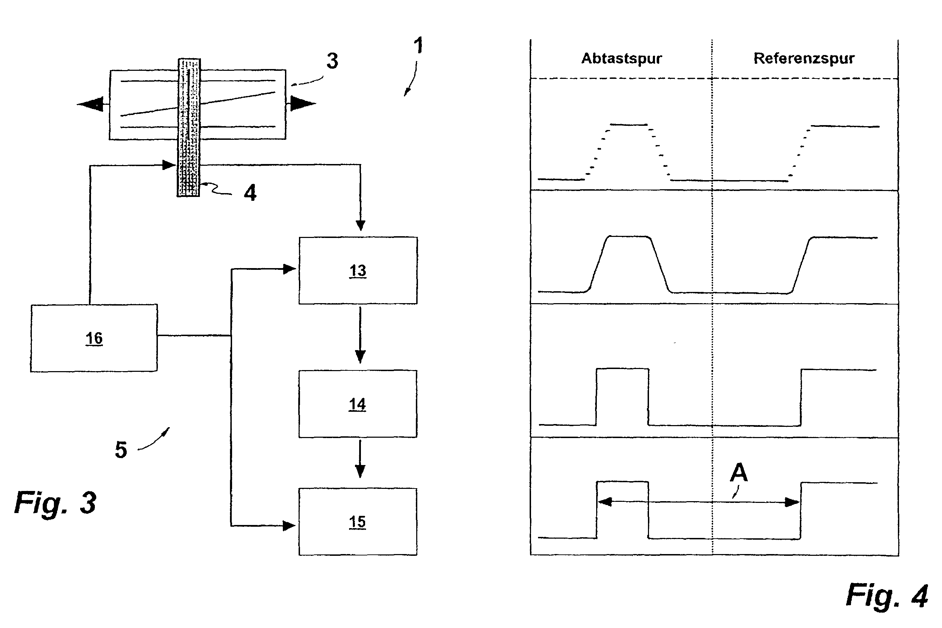

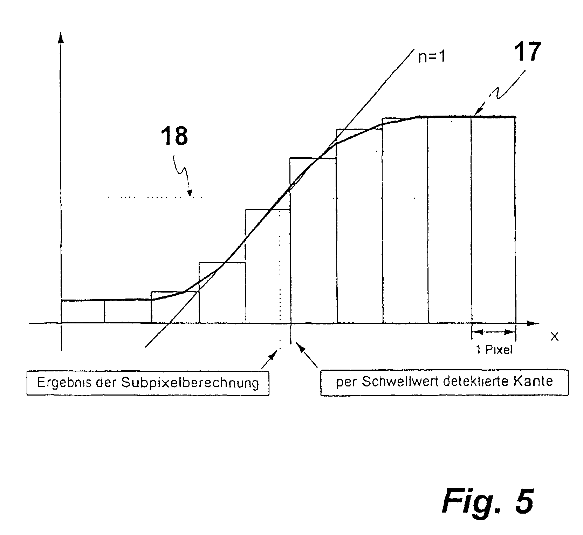

Die Auswerteeinheit 5 umfaßt, wie in Figur 3 in Form eines Blockschaltbildes dargestellt, einen Interpolator 13, einen Vergleicher 14, eine Auswertelogik 15 und einen Taktgeber 16. Der Taktgeber 16 taktet die CMOS-Sensorzeile 4 und bestimmt somit deren Abtastrate. Entsprechend getaktet wird der Eingang des Interpolators 13 mit dem Zeilensignal bzw. den Pixelsignalen der CMOS-Sensorzeile 4 beaufschlagt. Die Form dieses Signales ist dem Diagramm der Figur 4 entnehmbar, wobei bedingt durch die geringe Auflösung der Abbildung die Werte der einzelnen Bildpunkte 4', die außerhalb der Signalflanken liegen, als zusammenhängendes Signal wiedergegeben sind. Die in Figur 4 wiedergegebenen Signalveränderungen entsprechen jeweils den durch die in Figur 3 dargestellten elektronischen Bauelemente ausgeführten Signalverarbeitungsschritten. Durch den Interpolator 13 erfolgt zunächst eine Interpolation des ortsdiskreten CMOS-Sensorzeilensignals. Die Interpolation erfolgt bei dem dargestellten Ausführungsbeispiel durch Berechnung eines Interpolationspolynoms, das den Verlauf der Signalkante an dieser Stelle mit vorhersagbarer Genauigkeit approximiert. Zur Verdeutlichung des Interpolationsvorganges ist in Figur 5 beispielsweise die Interpolation des Hell-Dunkel-Übergangsbereiches 11 der Figur 1 abgebildet. In diesem Diagramm sind auf der x-Achse die einzelnen Bildpunkte und auf der y-Achse die Signalintensität der einzelnen Bildpunkte aufgetragen, die das ortsdiskrete Ursprungssignal darstellen. Das berechnete Interpolationspolynom 17 approximiert den tatsächlichen Verlauf des Hell-Dunkel-Übergangs.

Das interpolierte Zeilensignal (vgl. Figur 4) beaufschlagt den Vergleicher 14. In dem Vergleicher 14 erfolgt ein Abgleich des Interpolationspolynoms 17 mit einem vorgegebenen Schwellwert. Als Schwellwert ist bei dem dargestellten Ausführungsbeispiel 50 % der maximalen Helligkeit der Referenzlichtspur 9 vorgesehen. Durch Gleichsetzen des Interpolationspolynoms 17 mit dem Schwellwert 18 anschließend eine genaue Positionsbestimmung der Kante der Lichtspur 11. Aus dem Diagramm der Figur 5 läßt sich die berechnete Lage der Lichtspurkante und insbesondere deren unterschiedliche Lage bezogen auf die ansonsten allein durch die physikalische Pixelauflösung bestimmte Lage entnehmen. Der Vergleicher erzeugt somit ein hochaufgelöstes Sprungsignal, welches anschließend die Auswertelogik 15 beaufschlagt.

Die Auswertelogik 15 bestimmt, wie in Figur 4 gezeigt, den Abstand der hochaufgelösten Kanten der Hell-Dunkel-Übergangsbereiche 11 und 12, welcher Abstand in Figur 4 durch das Bezugszeichen A gekennzeichnet ist.

Der Taktgeber 16 beaufschlagt nicht nur die CMOS-Sensorzeile 4, sondern auch die Auswertelogik 15 bzw. den Interpolator 13. Durch die Auswertelogik 15 erfolgt ferner eine Überabtastung des Bildzeilensignales der CMOS-Sensorzeile 4. Dabei wird die sinnvolle maximale Überabtastungsrate, beispielsweise 16-facher Pixeltakt, prinzipiell nur durch den Signal-Rausch-Abstand des Sensors begrenzt.

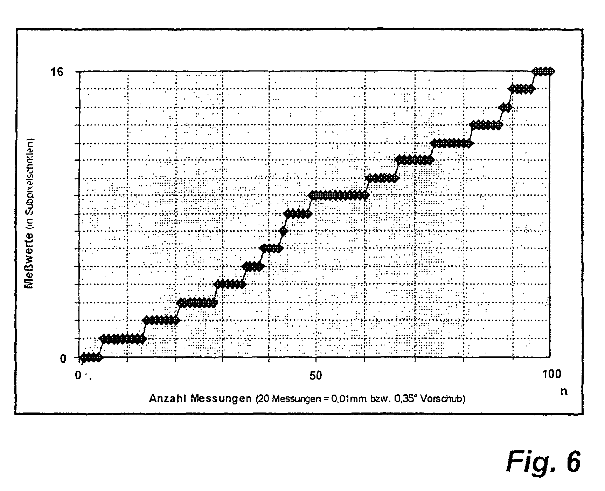

Das in Figur 6 gezeigte Diagramm verdeutlicht die Subpixelauflösung des Lenkwinkelsensors 1 innerhalb eines einzigen Bildpunktes 4'. Das Diagramm zeigt aufgetragen auf der y-Achse die Meßwerte der einzelnen Subpixelschritte, deren Anzahl aufgrund der 16-fachen Überabtastung 16 beträgt. Auf der x-Achse ist die Anzahl der Meßwerte aufgetragen. Die Codescheibe 3 ist zur Erzeugung der Kurve um 0,01 mm/s bzw. 0,35°/s bewegt worden. Die Auflösung des Positionserfassungssystems 1 beträgt bei einer CMOS-Sensorzeile 4 mit 128 Pixeln und einer 16-fachen Überabtastung bei 360° etwa 0,225 Grad je Subpixelwert bei einer lokalen Linearitätsabweichung von ± 3 Subpixelwerten oder ± 0,7 Grad.

Diese hochaufgelösten Meßwerte erlauben dann die Berechnung des absoluten Lenkwinkels, welcher Wert an ein Fahrdynamikregelsystem übergeben wird.

Zur Erfassung der Lenkradumdrehungen kann auf verschiedene Zähleinrichtungen zurückgegriffen werden, beispielsweise eine solche, wie sie in der DE 195 08 607 C1 der Anmelderin beschrieben ist.

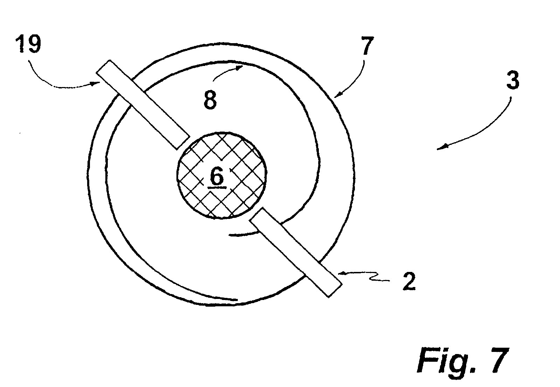

In Figur 7 ist das Positionserfassungssystem 1 dargestellt, dem eine zweite CMOS-Sensorzeile 19 zugeordnet ist. Die CMOS-Sensorzeile 19 ist diametral zur ersten CMOS-Sensorzeile 4 angeordnet und ebenso wie die CMOS-Sensorzeile 4 lichtbeaufschlagt. Die beiden CMOS-Sensorzeilen 4, 19 sind mit ihren Längsachsen fluchtend angeordnet. Durch Verwendung der beiden CMOS-Sensorzeilen 4, 19 ist es möglich, das Achsspiel in der Drehebene senkrecht zur Sensorlängsachse sowie eine mögliche Exzentrizität der Codescheibe 3 zur Drehachse der Lenkspindel 6 durch eine Mittelwertbildung zu kompensieren. Im Falle einer exakten Drehbewegung wird von beiden CMOS-Sensorzeilen 4, 19 jeweils der gleiche Winkelversatz ermittelt. Im Falle eines Achsspiels senkrecht zur Sensorlängsachse bzw. einer Exzentrizität der Codescheibe 3 wird der durch das Spiel hervorgerufene Versatz von der ersten CMOS-Sensorzeile 4 als positiver Winkelversatz und von der zweiten CMOS-Sensorzeile 19 als negativer Winkelversatz erfaßt, wobei gegebenenfalls nur ein Vektor des Versatzes, nämlich der der Längsachse der CMOS-Sensorzeilen 4, 19 entsprechende, erfaßt wird. Aufgrund dieser Eigenschaften kann durch nachfolgende Mittelwertbildung über die beiden von den beiden CMOS-Sensorzeilen 4, 19 ermittelten Winkelwerte sowohl das Achsspiel in Sensorrichtung als auch eine Exzentrizität der Codescheibe 3 in einer numerisch besonders aufwandsgünstigen Art und Weise kompensiert werden. Für eine Drehbewegung ergibt sich:

$$\varphi_{neu,kompensiert} = \frac{(\varphi_{alt} + \Delta\varphi)_{Sensor1} + (\varphi_{alt}\Delta\varphi)_{Sensor2}}{2} = \varphi_{alt} + \Delta\varphi$$

Für ein Achsspiel oder einen Mittenversatz ergibt sich mit einem daraus interpretierten Winkelversatz:

$$\varphi_{neu,kompensiert} = \frac{(\varphi_{alt} + \Delta\varphi)_{Sensor1} + (\varphi_{alt}\Delta\varphi)_{Sensor2}}{2} = \varphi_{alt}$$

Eine Änderung des detektierten Winkels kann somit nur noch durch eine Drehbewegung erfolgen.

Gemäß einem weiteren Verfahren wird der Abstand zwischen der Lichtspur 10 der Abtastlinie 8 und der Lichtspur 9 der Referenzlinie 7 durch ein Korrelationsverfahren ermittelt. Zu diesem Zweck erfolgt in einem ersten Schritt eine lagebezogene Ermittlung der Signalcluster der Abtastlichtspur 10 und der Referenzlichtspur 9. Anschließend wird jedes Signalcluster mit einem Referenzimpuls zur Erstellung einer Korrelationsfunktion verglichen. Der Referenzimpuls ist bezüglich seiner Formgebung an die zu erwartenden Signalcluster S angepaßt und kann beispielsweise durch die nachfolgend wiedergegebene Funktion beschrieben werden:

$$f(x) = \begin{cases} a\dfrac{\sin(bx)}{x}, x \neq 0 \\ a, x = 0 \end{cases}$$

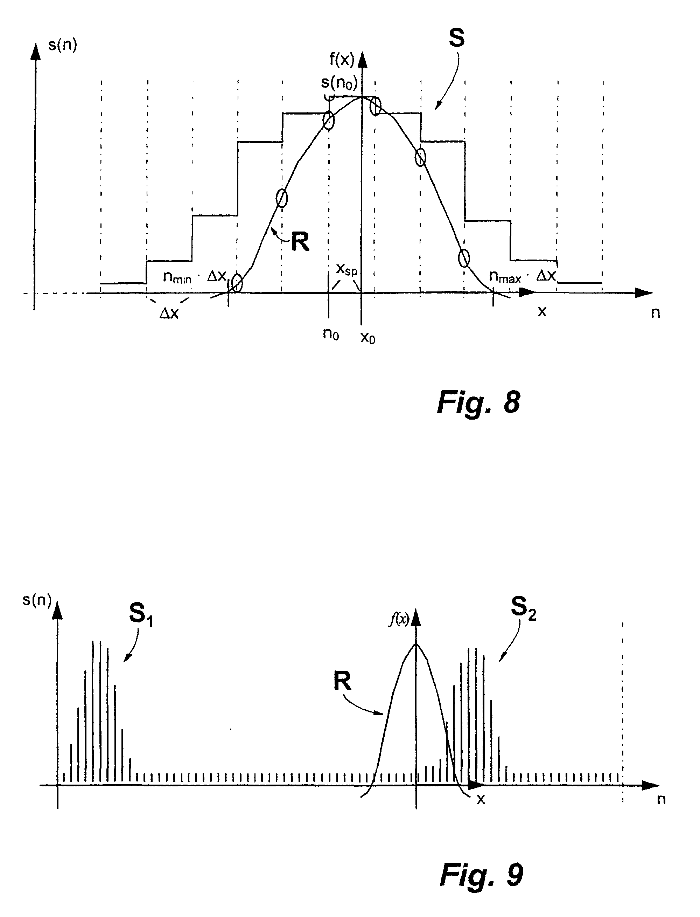

Zur Erstellung einer solchen Korrelationsfunktion bzw. der den Signalclustern zugeordneten Korrelationsfunktionsabschnitte wird der Referenzimpuls schrittweise über die gesamte Ersteckung des Signalclusters S verfahren. Die gewählte Schrittweite ist erheblich geringer als die Erstreckung eines Bildpunktes, so daß die Auflösung dieses Abstandsbestimmungsverfahrens subpixelgenau ist. In jedem Vergleichsschritt wird, wie schematisch in Figur 8 dargestellt, die Unterschiede der erfaßten Intensität [s(n)] mit den Funktionswerten des Referenzimpulses verglichen, woraus zu jedem Schritt ein Korrelationskoeffizient bestimmbar ist.

Das schrittweise Abtasten der Signalcluster $S_1$ und $S_2$ ist schematisiert in Figur 9 wiedergegeben. Dabei gibt das Signalcluster $S_1$ die Referenzlichtspur 9 und das Signalcluster $S_2$ die Abtastlichtspur 10 wieder. Die Abstandsbestimmung erfolgt dadurch, daß der Abstand der sich auf der Korrelationsfunktion abbildenden Maxima ermittelt wird.

Anstelle der Erstellung von Korrelationskoeffizienten können auch in jedem Schritt die quadratischen Fehlersummen ermittelt werden, so daß sich das Charakteristikum für jedes Signalcluster als konkretes Minimum erkennen läßt. Der Abstand dieser Minima ist dann wiederum das Maß für den absoluten Lenkwinkeleinschlag. Die quadratischen Fehlersummen lassen sich gemäß nachfolgend wiedergegebener Gleichung ermitteln:

$$K(x_0) = \sum_{n=n_{min}}^{n_{max}} \left[ s\left(n_0 + n\right) - f\left(n \cdot \Delta x - x_{sp}\right) \right]^2$$

$$\Updownarrow$$

$$K(x_0) = \sum_{n=n_{min}}^{n_{max}} \left[ s\left( TRUNC\left(\frac{x_0}{\Delta x}\right) + n \right) - f\left(n \cdot \Delta x - (x_0 MOD \Delta x)\right) \right]^2$$

**Zusammenstellung der Bezugszeichen**

| | |
|---|---|
| 1 | Lenkwinkelsensor |
| 2 | Lichtquelle |
| 3 | Codescheibe |
| 4 | CMOS-Sensorzeile |
| 4' | Bildpunkt (Pixel) |
| 5 | Auswerteeinheit |
| 6 | Lenkspindel |
| 7 | Lichtschlitz, Referenzlinie |
| 8 | Lichtschlitz, Abtastlinie |
| 9 | Lichtspur, Referenzlinie |
| 10 | Lichtspur, Abtastlinie |
| 11, 11' | Hell-Dunkel-Übergangsbereich |
| 12 | Hell-dunkel-Übergangsbereich |
| 13 | Interpolator |
| 14 | Vergleicher |
| 15 | Auswertelogik |
| 16 | Taktgeber |
| 17 | Interpolationspolynom |
| 18 | Schwellwert |
| 19 | CMOS-Sensorzeile |

| | |
|---|---|
| A | Abstand |
| R | Referenzimpuls |
| S | Signalcluster |
| $S_1$ | Signalcluster |
| $S_2$ | Signalcluster |

**Patentansprüche**

**1.** Verfahren zum Bestimmen der absoluten Winkelstellung des Lenkrades eines Kraftfahrzeuges innerhalb eines Segmentes von 360° unter Verwendung eines optoelektronischen Lenkwinkelsensors mit folgenden Schritten:

- Bestrahlen eines eine Abtastlinie (8) und eine Referenzlinie (7) aufweisenden Codegebers (3) mit einer Lichtquelle (2) zum Abbilden von durch die Codespuren (7, 8) erzeugten Lichtspuren (9, 10) auf der photosensitven Oberfläche eines Zeilensensors (4),
- Abtasten der Lichtspuren (9, 10) mit dem Zeilensensor (4) und
- Beaufschlagen einer Auswerteeinheit (5) mit den Ausgangssignalen des Zeilensensors (4) zur Bestimmung des Abstandes zwischen den beiden Lichtspuren (9, 10) als Maß der absoluten Winkelstellung des Lenkrades,

**dadurch gekennzeichnet, daß**

- die Abbildung der Lichtspuren (9, 10) auf der photosensitiven Oberfläche des Zeilensensors (4) dergestalt erfolgt, daß sich zumindest ein Charakteristikum (11, 12; $S_1$; $S_2$) der beiden Lichtspuren (9, 10) über mehrere Bildpunkte (4') des Zeilensensors (4) hinweg erstreckt, und

- daß zur Bestimmung des Abstandes zwischen den beiden Lichtspuren (9, 10) jeder Lichtspur (9, 10) ein die Lage auf dem Zeilensensor (4) in einer subpixelgenauen ortsdiskreten Auflösung wiedergebender Referenzwert zugeordnet wird und anschließend die Abstandsbestimmung zwischen den beiden Referenzwerten erfolgt, wobei der Referenzwert einer Lichtspur (9, 10) durch Ausnutzen eines sich über mehrere Bildpunkte (4') des Zeilensensors (4) hinweg erstrekkenden Lichtspurcharakteristikums (11, 12; $S_1$; $S_2$) und durch Bildung jeweils eines sich über das Lichtspurcharakteristikum (11, 12; $S_1$; $S_2$) erstreckenden Interpolationspolynoms ermittelt wird, welches Interpolationspolynom anschließend mit einem vorgegebenen Schwellwert zur Definition des der Lichtspur (9, 10) zugeordneten Referenzwertes verglichen wird.

2. Verfahren nach Anspruch 1, **dadurch gekennzeichnet, daß** zur Abstandsbestimmung der der Abtastlichtspur (10) und der Referenzlichtspur (9) zugeordneten Signalcharakteristika in einem ersten Auswerteschritt eine Interpolation der je Bildpunkt des Zeilensensors (4) abgetasteten Signale eines Hell-Dunkel-Übergangs der Referenzlichtspur (9) und der Abtastlichtspur (10) zur Erzeugung eines jeweils quasi analogen Hell-Dunkel-Übergangs-Signals (17) erfolgt, welche interpolierten Signale (17) in einem weiteren Auswerteschritt zur Erzeugung von hochaufgelösten Sprungsignalen mit einem vorbestimmten Schwellwert (18) verglichen werden, woran anschließend eine Bestimmung des Abstandes (A) der beiden Sprungsignale zueinander unter Verwendung einer Auswertelogik (15) erfolgt und durch die Auswertelogik (15) eine Überabtastung der Zeilensignale durchgeführt wird, deren Auswertetakt höher als der Pixeltakt des Zeilensensors (4) ist, so daß jeder Bildpunkt (4') durch eine der Taktrate der Überabtastung entsprechenden Anzahl von Meßwerten dargestellt ist.

3. Verfahren nach Anspruch 2, **dadurch gekennzeichnet, daß** zur Abstandsbestimmung in einem ersten Schritt beide Hell-Dunkel-Übergange der Referenzlichtspur (9) und der Abtastlichtspur (10) zur Erzeugung von jeweils quasi analogen Hell-Dunkel-Übergangs-Signalen interpoliert werden und nach Bildung der Sprungsignale die Orte der beiden Flanken eines solchen Signales gemittelt werden bevor zur Lenkwinkelbestimmung der Abstand der Mittelwerte der Orte der beiden interpolierten Sprungsignale ermittelt wird.

4. Verfahren nach Anspruch 2 oder 3, **dadurch gekennzeichnet, daß** das Zeilensensorsignal in einer dem 16-fachen des Pixeltaktes entsprechenden Rate überabgetastet wird.

5. Verfahren zum Bestimmen der absoluten Winkelstellung des Lenkrades eines Kraftfahrzeuges innerhalb eines Segmentes von 360° unter Verwendung eines optoelektronischen Lenkwinkelsensors mit folgenden Schritten:

- Bestrahlen eines eine Abtastlinie und eine Referenzlinie aufweisenden Codegebers mit einer Lichtquelle zum Abbilden von durch die Codespuren erzeugten Lichtspuren auf der photosensitven Oberfläche eines Zeilensensors,
- Abtasten der Lichtspuren mit dem Zeilensensor und
- Beaufschlagen einer Auswerteeinheit mit den Ausgangssignalen des Zeilensensors zur Bestimmung des Abstandes zwischen den beiden Lichtspuren als Maß der absoluten Winkelstellung des Lenkrades,

**dadurch gekennzeichnet, daß**

- die Abbildung der Lichtspuren auf der photosensitiven Oberfläche des Zeilensensors dergestalt erfolgt, daß sich zumindest ein Charakteristikum der beiden Lichtspuren über mehrere Bildpunkte des Zeilensensors hinweg erstreckt, und
- daß zur Abstandsbestimmung der der Abtastlichtspur und der Referenzlichtspur zugeordneten Signale in einem ersten Auswerteschritt die Lage der Lichtspuren auf dem Zeilensensor bzw. die Lage der von jeder Lichtspur erzeugten, sich über mehrere Bildpunkte des Zeilensensors erstreckenden Signalcluster (S, $S_1$, $S_2$) der Lichtspuren ermittelt wird und anschließend jedes Signalcluster (S, $S_1$, $S_2$) mit einem vorbestimmten Referenzimpuls (R) zur Ermittlung einer Korrelationsfunktion verglichen wird, welches Vergleichen in einer vorbestimmten Schrittweite, die kleiner als die Erstreckung eines Bildpunktes ist, erfolgt, und die Bestimmung des Abstandes von Abtastlichtspur und Referenzlichtspur durch Bestimmen des Abstandes zwischen den beiden durch die Lichtspuren bedingten Extrema der Korrelationsfunktion erfolgt.

6. Verfahren nach Anspruch 5, **dadurch gekennzeichnet, daß** die Ermittlung der Lage der Signalcluster (S, $S_1$, $S_2$) durch hierarchisches Suchen, bei der die Schrittweite des Abtastens der Zeilensensorsignale mit dem Referenzimpuls (R) größer ist als die Erstreckung eines Bildpunktes, und das Auffinden eines Signalclusters (S, $S_1$, $S_2$)

durch einen Schwellwertvergleich des jeweils ermittelten Korrelationskoeffizienten erfolgt.

7. Verfahren nach Anspruch 5, **dadurch gekennzeichnet, daß** die Ermittlung der Lage der Signalcluster ($S$, $S_1$, $S_2$) in einem ersten Auswerteschritt durch eine Interpolation der je Bildpunkt des Zeilensensors (4) abgetasteten Signale der beiden Hell-Dunkel-Übergänge des Signalclusters der Referenzlichtspur (9) und der Abtastlichtspur (10) zur Erzeugung von jeweils quasi analogen Hell-Dunkel-Übergangs-Signalen erfolgt, welche interpolierten Signale in einem weiteren Auswerteschritt zur Erzeugung von hochaufgelösten Sprungsignalen mit einem vorbestimmten Schwellwert verglichen werden.

8. Verfahren zum Bestimmen der absoluten Winkelstellung des Lenkrades eines Kraftfahrzeuges innerhalb eines Segmentes von 360° unter Verwendung eines optoelektronischen Lenkwinkelsensors mit folgenden Schritten:

   - Bestrahlen eines eine Abtastlinie und eine Referenzlinie aufweisenden Codegebers mit einer Lichtquelle zum Abbilden von durch die Codespuren erzeugten Lichtspuren auf der photosensitven Oberfläche eines Zeilensensors,
   - Abtasten der Lichtspuren mit dem Zeilensensor und
   - Beaufschlagen einer Auswerteeinheit mit den Ausgangssignalen des Zeilensensors zur Bestimmung des Abstandes zwischen den beiden Lichtspuren als Maß der absoluten Winkelstellung des Lenkrades,

   **dadurch gekennzeichnet, daß**

   - die Abbildung der Lichtspuren auf der photosensitiven Oberfläche des Zeilensensors dergestalt erfolgt, daß sich zumindest ein Charakteristikum der beiden Lichtspuren über mehrere Bildpunkte des Zeilensensors hinweg erstreckt, und
   - daß zur Abstandsbestimmung der der Abtastlichtspur und der Referenzlichtspur zugeordneten Signale die Schwerpunkte der von jeder Lichtspur erzeugten, sich über mehrere Bildpunkte des Zeilensensors erstreckenden Signalcluster ermittelt werden und anschließend der Abstand der beiden Schwerpunkte zueinander bestimmt wird.

9. Verfahren nach einem der Ansprüche 1 bis 8, **dadurch gekennzeichnet, daß** eine Kompensation des Achsspiels und der Exzentrizität des Codegebers (3) durch Mitteln von zuvor bestimmten Winkelwerten von zwei sich diametral gegenüberliegenden, lichtbeaufschlagten Zeilensensoren (4, 19) erfolgt.

10. Optoelektronischer Lenkwinkelsensor zum Bestimmen der absoluten Winkelstellung des Lenkrades eines Kraftfahrzeuges innerhalb eines Segmentes von 360° umfassend einen Codegeber (3) mit einer einer Abtastlinie (8) und einer Referenzlinie (7) und eine als Zeilensensor (4) ausgebildete Sensoreinrichtung, welcher Codegeber (3) mit der Drehbewegung des Lenkrades relativ zum Zeilensensor (4) bewegbar und von seiner einen Seite mit Licht bestrahlt ist, so daß die Codespuren (7, 8) auf der photosensitiven Oberfläche des Zeilensensors (4) abgebildet und von diesem erfaßbar sind, welcher Zeilensensor (4) zur Bestimmung der erfaßten Lichtspuren (9, 10) an eine elektronische Auswerteeinheit zur Bestimmung des Abstandes der beiden Lichtspuren (9, 10) voneinander als Maß für die absolute Winkelstellung des Lenkrades angeschlossen ist, **dadurch gekennzeichnet, daß** die durch die Lichtbestrahlung des Codegebers (3) erzeugten Lichtspuren (9, 10) der Referenzlinie (7) und der Abtastlinie (8) bei ihrer Abbildung auf dem Zeilensensor (4) eine sich über mehrere Bildpunkte (4') erstreckende Unschärfe im Hell-Dunkel-Übergang zwischen dem Hellbereich einer Lichtspur (9, 10) und den benachbarten dunklen Bereichen aufweisen und daß die von den Signalen des Zeilensensors (4) beaufschlagte Auswerteeinheit (5) eine Einrichtung zum Ermitteln eines einer Lichtspur (9, 10) zugeordneten Referenzwertes unter Ausnutzung des sich über mehrere Bildpunkte (4') erstreckenden Hell-Dunkel-Übergangs (11, 11', 12) in einer subpixelgenauen ortsdiskreten Auflösung bezogen auf die Längserstreckung des Zeilensensors (4) sowie zum Ermitteln des Abstandes zwischen den beiden ermittelten Referenzwerten aufweist, wobei die Einrichtung zum Ermitteln des Abstandes einen Interpolator (13) zum Erzeugen eines interpolierten Signales (17) aus dem bildpunktweise abgetasteten ortsdiskreten Zeilensignal, einen Vergleicher (14) zum Vergleichen des interpolierten Signales (17) mit einem vorbestimmten Schwellwert (18) zur Erzeugung von Sprungsignalen sowie eine Auswertelogik (15) zum Bestimmen des Abstandes (A) des dem Referenzsignal und Abtastsignal zugeordneten Sprungsignal umfaßt.

11. Optoelektronischer Lenkwinkelsensor nach Anspruch 10. **dadurch gekennzeichnet, daß** die welche Auswertelogik (15) zur Überabtastung der Zeilensensorsignale mit einem vorbestimmten Takt, der höher als der Pixeltakt des Zeilensensors (4) ist, getaktet ist.

**12.** Optoelektronischer Lenkwinkelsensor nach Anspruch 11, **dadurch gekennzeichnet, daß** sich der Hell-Dunkel-Übergang (11, 11', 12) einer Lichtlinie (9,10) im Bereich von 10 - 90% des Übergangs über 3 bis 10 Pixel, insbesondere über 5 - 7 Pixel erstreckt.

**13.** Optoelektronischer Lenkwinkelsensor nach Anspruch 10 oder 12, **dadurch gekennzeichnet, daß** der Zeilensensor (4) bzw. die Bildpunkte (4') und ein der Auswerteeinheit (5) zugeordneter Mikrocontroller Pixel-synchron arbeiten.

**14.** Optoelektronischer Lenkwinkelsensor nach einem der Ansprüche 10 bis 13, **dadurch gekennzeichnet, daß** die Überabtastungsrate der Zeilensensorsignale dem 16-fachen Takt entspricht, mit welchem der Zeilensensor (4) bzw. die einzelnen Pixel (4') getaktet sind und der Zeilensensor (4) einen Signal-Rausch-Abstand (SNR) von mindestens 30dB besitzt.

**15.** Optoelektronischer Lenkwinkelsensor nach einem der Ansprüche 10 bis 14, **dadurch gekennzeichnet, daß** die Referenzlinie (7) eine konzentrische, im peripheren Bereich der Codescheibe (3) angeordnete Linie und die Abtastlinie (8) eine von innen nach außen größer werdende archimedische Spirale mit einer sich um 360° erstreckenden Windung ist.

**16.** Optoelektronischer Lenkwinkelsensor nach einem der Ansprüche 10 bis 15, **dadurch gekennzeichnet, daß** der Codegeber auf einem Zylinder angeordnet ist, der koaxial zur Drehachse der Lenkspindel angeordnet ist.

**17.** Optoelektronischer Lenkwinkelsensor nach Anspruch 16, **dadurch gekennzeichnet, daß** die Referenzlinie ein Kreis mit einem senkrecht auf der Lenkachse stehenden Radius und die Abtastlinie eine Schraubenlinie mit gleichem Radius sind.

**18.** Optoelektronischer Lenkwinkelsensor nach einem oder mehreren der Ansprüche 10 bis 17, **dadurch gekennzeichnet, daß** dem Lenkwinkelsensor ein zweiter, diametral dem ersten Zeilensensor (4) gegenüberliegender, mit seiner Längsachse zur Längsachse des ersten Zeilensensors (4) fluchtend angeordneter, von einer Lichtquelle beaufschlagter Zeilensensor (19) zugeordnet ist.

**Claims**

**1.** Method for determining the absolute angular position of the steering wheel of a motor vehicle within a segment of 360° by using an optoelectronic steering angle sensor including the following steps:

- exposing a code generator (3), which has a scanning line (8) and a reference line (7), to a light source (2) for the imaging of light tracks (9, 10), which are generated by the code tracks (7, 8), on the photosensitive surface of a line sensor (4),
- scanning the light tracks (9, 10) with the line sensor (4) and
- admitting the output signals of the line sensor (4) to an evaluation unit (5) for determining the spacing between the two light tracks (9, 10) as measurement of the absolute angular position of the steering wheel,

**characterised in that**

- the image of the light tracks (9, 10) on the photosensitive surface of the line sensor (4) is effected in such a manner that at least one characteristic (11, 12; $S_1$; $S_2$) of the two light tracks (9, 10) extends over a plurality of image dots (4') of the line sensor (4), and
- **in that**, for determining the spacing between the two light tracks (9, 10), a reference value, which reproduces the position on the line sensor (4) in a resolution that has sub-pixel accuracy and is location-discrete, is assigned to each light track (9, 10) and subsequently the spacing between the two reference points is determined, the reference value of a light track (9, 10) being determined by utilising a light track characteristic (11, 12; $S_1$; $S_2$), which extends over a plurality of image dots (4') of the line sensor (4), and by forming respectively an interpolation polynomial, which extends over the light track characteristic (11, 12; $S_1$; $S_2$), which interpolation polynomial is then compared to a predetermined threshold value for defining the reference value which is assigned to the light track (9, 10).

**2.** Method according to claim 1, **characterised in that** for determining the spacing of the signal characteristics assigned to the scanning light track (10) and the reference light track (9), in a first evaluation step interpolation of the signals, scanned per image dot of the line sensor, of a bright-dark transition of the reference light track (9) and the scanning light track (10) for creating respectively a quasi analogue bright-dark transition signal (17) is effected, which interpolated signals (17) are compared with a predetermined threshold value (18) in a further evaluation step for creating high-resolution branch signals, after which a determining of the spacing (A) of the two branch signals one to the other by using an evaluation logic (15) is then effected and through the evaluation logic (15) an over-scanning of the line signals is performed, the evaluating pulse of which is higher than the pixel pulse of the line sensor (4), such that each image dot (4') is represented by a quantity of measured values corresponding to the pulse rate of the over-scanning.

3. Method according to claim 2, **characterised in that**, for determining the spacing, in a first step the two bright-dark transitions of the reference light track (9) and of the scanning light track (10) are interpolated to create in each case quasi analogue bright-dark transition signals and, after forming the branch signals, the locations of the two signal edges of this type of signal are determined, before, for ascertaining the steering angle, the spacing of the mean values of the locations of the two interpolated branch signals are determined.

4. Method according to claim 2 or 3, **characterised in that** the line sensor signal is over-scanned at a rate corresponding to 16 times the pixel pulse.

5. Method for determining the absolute angular position of the steering wheel of a motor vehicle within a segment of 360° by using an optoelectronic steering angle sensor including the following steps:

   - exposing a code generator, which has an scanning line and a reference line, to a light source for the imaging of light tracks, which are generated by the code tracks, on the photosensitive surface of a line sensor,
   - scanning the light tracks with the line sensor and
   - admitting the output signals of the line sensor to an evaluation unit for determining the spacing between the two light tracks as measurement of the absolute angular position of the steering wheel,

   **characterised in that**

   - the image of the light tracks on the photosensitive surface of the line sensor is effected in such a manner that at least one characteristic of the two light tracks extends over a plurality of image dots of the line sensor, and
   - **in that**, for determining the spacing of the signals assigned to the scanning light track and the reference light track, a first evaluation step determines the position of the light tracks on the line sensor or respectively the position of the signal clusters ($S$, $S_1$, $S_2$) of the light tracks , which clusters extend over a plurality of image dots of the line sensor and are generated by each light track, and then each signal cluster ($S$, $S_1$, $S_2$) is compared with a predetermined reference pulse (R) for determining a correlation function, which comparison is effected within a predetermined step range, which is smaller than the extension of one image dot, and the determining of the spacing of scanning light track and reference light track is effected by determining the spacing between the two extremes of the correlation function caused by the light tracks.

6. Method according to claim 5, **characterised in that** the determining of the position of the signal cluster ($S$, $S_1$, $S_2$) is effected through hierarchical searching, where the step range of the scanning of the line sensor signals with the reference pulse (R) is greater than the extension of one imaging dot, and the finding of a signal cluster ($S$, $S_1$, $S_2$) is effected through a threshold value comparison of each of the correlation coefficients determined.

7. Method according to claim 5, **characterised in that** the determining of the position of the signal cluster ($S$, $S_1$, $S_2$) in a first evaluation step is effected through interpolation of the signals, scanned per image dot of the line sensor, of the two bright-dark transitions of the signal cluster of the reference light track (9) and of the scanning light track (10) for generating in each case quasi analogue bright-dark transition signals, which interpolated signals are compared in a further evaluation step for generating high-resolution branch signals with a predetermined threshold value.

8. Method for determining the absolute angular position of the steering wheel of a motor vehicle within a segment of 360° by using an optoelectronic steering angle sensor with the following steps:

   - exposing a code generator, which has a scanning line and a reference line, to a light source for the imaging of light tracks, which are generated by the code tracks, on the photosensitive surface of a line sensor,

- scanning the light tracks with the line sensor and
- admitting the output signals of the line sensor to an evaluation unit for determining the spacing between the two light tracks as measurement of the absolute angular position of the steering wheel,

**characterised in that**

- the image of the light tracks on the photosensitive surface of the line sensor is effected in such a manner that at least one characteristic of the two light tracks extends over a plurality of image dots of the line sensor, and
- **in that**, for determining the spacing of the signals assigned to the scanning light track and the reference light track, the points of concentration of the signal clusters are determined, which clusters extend over a plurality of image dots of the line sensor and are generated by each light track, and then the spacing between the two points of concentration one relative to the other is determined.

9. Method according to one of claims 1 to 8, **characterised in that** compensation for axial play and eccentricity of the code generator (3) is effected through mean values of previously predetermined angle values of two diametrically opposite line sensors (4, 19), which are acted upon by light.

10. Optoelectronic steering angle sensor for determining the absolute angular position of the steering wheel of a motor vehicle within a segment of 360° including a code generator (3) having a scanning line (8) and a reference line (7) and a sensor device, which is configured as line sensor (4), which code generator (3) is displaceable relative to the line sensor (4) with the rotational movement of the steering wheel and from its one side is exposed to light in such a manner that the code tracks (7, 8) are imaged on the photosensitive surface of the line sensor (4) and are detectable by this latter, which line sensor (4), for determining the detected light tracks (9, 10), is connected to an electronic evaluation unit for determining the spacing of the two light tracks (9, 10) one to the other as measurement for the absolute angular position of the steering wheel, **characterised in that** the light tracks (9, 10) of the reference line (7) and the scanning line (8), generated by exposing the code generator (3) to light, when they are imaged on the line sensor (4), have a lack of definition, extending over a plurality of image dots (4'), in the bright-dark transition between the bright region of one light track (9, 10) and the adjacent dark regions, and **in that** the evaluation unit (5), acted upon by the signals of the line sensor (4), has a device for determining a reference value assigned to a light track (9, 10) by utilising the bright-dark transition (11, 11', 12), which extends over a plurality of image dots (4'), in a resolution that has sub-pixel accuracy and is location-discrete, with reference to the longitudinal extension of the line sensor (4) as well as for determining the spacing between the two reference values determined, the device including, for determining the spacing, an interpolator (13) for generating an interpolated signal (17) from the location-discrete line signal, which has been scanned dot by dot, a comparator (14) for comparing the interpolated signal (17) with a predetermined threshold value (18) for generating branch signals, as well as an evaluation logic (15) for determining the spacing (A) of the branch signal assigned to the reference signal and the scanning signal.

11. Optoelectronic steering angle sensor according to claim 10, **characterised in that** the evaluation logic (15) for over-scanning the line sensor signals at a predetermined pulse, which is higher than the pixel pulse of the line sensor, is clocked.

12. Optoelectronic steering angle sensor according to claim 11, **characterised in that** the bright-dark transition (11, 11', 12) of a light line (9, 10) extends in the region of 10 - 90% of the transition over 3 to 10 pixels, more especially over 5 - 7 pixels.

13. Optoelectronic steering angle sensor according to claim 10 or 12, **characterised in that** the line sensor (4) or respectively the image dots (4') and a micro-controller, assigned to the evaluation unit (5), operate in a synchronous pixel manner.

14. Optoelectronic steering angle sensor according to one of claims 10 to 13, **characterised in that** the over-scanning rate of the line sensor signals corresponds to 16 times the pulse with which the line sensor (4) or respectively the individual pixels (4') are clocked and the line sensor (4) has a signal -to-noise ratio (SNR) of at least 30 dB.

15. Optoelectronic steering angle sensor according to one of claims 10 to 14, **characterised in that** the reference line (7) is a concentric line disposed in the peripheral region of the code disc (3) and the scanning line (8) is an Archimedes' spiral, becoming larger from inside to outside and having a winding, which extends about 360°.

16. Optoelectronic steering angle sensor according to one of claims 10 to 15, **characterised in that** the code generator is disposed on a cylinder, which is disposed coaxially relative to the axis of rotation of the steering spindle.

17. Optoelectronic steering angle sensor according to claim 16, **characterised in that** the reference line is a circle with a radius which stands at right angles on the steering axle and the scanning line is a helix with the same radius.

18. Optoelectronic steering angle sensor according to one or several of the claims 10 to 17, **characterised in that** a second line sensor (19) is assigned to the steering angle sensor, which second line sensor (19) is diametrically opposite the first line sensor (4), is disposed so as to be aligned with its longitudinal axis relative to the longitudinal axis of the first line sensor (4) and is acted upon by a light source.


**Revendications**

1. Procédé de détermination de la position angulaire absolue du volant de direction d'un véhicule à moteur sur un segment de 360° en utilisant un capteur de l'angle de braquage optoélectronique, selon les étapes suivantes :

   - exposition d'un élément codeur (3) muni d'une ligne de balayage (8) et d'une ligne de référencé (7) avec une source lumineuse (2) pour représenter des pistes lumineuses (9, 10) générées par les pistes codeuses (7, 8) sur la surface photosensible d'un capteur en ligne (4),
   - balayage des pistes lumineuses (9,10) par le capteur en ligne (4) et
   - activation d'une unité d'évaluation (5) par les signaux de sortie du capteur en ligne (4) en vue de déterminer l'intervalle entre les deux pistes lumineuses (9, 10) constituant la mesure de la position angulaire absolue du volant de direction,

   **caractérisé en ce que**

   - la représentation des pistes lumineuses (9, 10) sur la surface photosensible du capteur en ligne (4) se fasse de telle manière qu'au moins une caractéristique (11, 12 ; $S_1$ ; $S_2$) des deux pistes lumineuses (9, 10) s'étende sur plusieurs points d'image (4') du capteur en ligne (4), et
   - que pour déterminer l'intervalle entre les deux pistes lumineuses (9, 10), chaque piste lumineuse (9, 10) se voit attribuer une valeur de référence reflétant la position sur le capteur en ligne (4) avec une résolution locale et discrète avec une précision au sous-pixel près et qu'ensuite soit déterminé l'intervalle entre les deux valeurs de référence, sachant que la valeur de référence d'une piste lumineuse (9, 10) est déterminée en utilisant une caractéristique de la piste lumineuse (11, 12 ; $S_1$; $S_2$) qui s'étende sur plusieurs points d'image (4') du capteur en ligne (4) et en posant un polynôme d'interpolation qui s'étende sur la caractéristique de la piste lumineuse (11, 12 ; $S_1$ ; $S_2$), lequel polynôme d'interpolation sera ensuite comparé à une valeur de seuil prédéterminée à des fins de définition de la valeur de référence affectée à la piste lumineuse (9, 10).

2. Procédé selon la revendication 1, **caractérisé en ce que**, pour déterminer l'intervalle des caractéristiques de signaux affectés à la piste de balayage (10) et à la piste de référence (9), on effectue dans le premier temps de l'évaluation, à des fins de génération d'un signal de transition (17) clair-obscur quasiment analogique, une interpolation des signaux de transition clair-obscur de la piste lumineuse de référence (9) et de la piste lumineuse de balayage (10), signaux balayés pour chaque point d'image du capteur en ligne (4), lesquels signaux interpolés (17) seront au cours d'une seconde étape d'évaluation, comparés avec une valeur de seuil (18) prédéfinie dans le but de générer des signaux discontinus de haute résolution, sachant qu'à partir de là, une détermination de l'intervalle (A) entre les deux signaux discontinus s'effectuera en utilisant une logique d'évaluation (15) et que cette logique d'évaluation (15) se charge d'un suréchantillonnage des signaux en ligne, dont la fréquence d'évaluation est plus élevée que la fréquence des pixels du capteur en ligne (4), de sorte que chaque point d'image (4') est représenté par une quantité de valeurs mesurées correspondant à la fréquence du suréchantillonnage.

3. Procédé selon la revendication 2, **caractérisé en ce que**, pour déterminer l'intervalle, on interpole au cours d'une première étape les deux transitions clair-obscur de la piste lumineuse de référence (9) et de la piste lumineuse de balayage (10) pour générer des signaux de transition clair-obscur quasi analogiques et qu'après formation des signaux discontinus, les lieux des deux flancs d'un tel signal sont dégagés par calcul d'une moyenne avant de déterminer l'intervalle entre les valeurs moyennes des lieux des deux signaux discontinus interpolés à des fins de détermination de l'angle de braquage d'un volant de direction.

4. Procédé selon la revendication 2 ou 3, **caractérisé en ce que** le signal du capteur en ligne fasse l'objet d'un suréchantillonnage à un taux correspondant à 16x la fréquence de pixel.

5. Procédé de détermination de la position angulaire absolue du volant de direction d'un véhicule à moteur sur un segment de 360° en utilisant un capteur de l'angle de braquage optoélectronique selon les étapes suivantes :

   - exposition d'un élément codeur muni d'une ligne de balayage et d'une ligne de référence avec une source lumineuse pour représenter des pistes lumineuses générées par les pistes codeuses sur la surface photosensible d'un capteur en ligne,
   - balayage des pistes lumineuses par le capteur en ligne et
   - activation d'une unité d'évaluation par les signaux de sortie du capteur en ligne en vue de déterminer l'intervalle entre les deux pistes lumineuses constituant la mesure de la position angulaire absolue du volant de direction,

   **caractérisé en ce que**

   - la représentation des pistes lumineuses sur la surface photosensible du capteur en ligne se fasse de telle manière qu'au moins une caractéristique des deux pistes lumineuses s'étende sur plusieurs points d'image du capteur en ligne, et
   - que pour déterminer l'intervalle entre les signaux affectés à la piste lumineuse de balayage et la piste de référence, on détermine au cours d'une première étape d'évaluation la position des pistes lumineuses sur le capteur en ligne, en l'occurrence la position des clusters de signaux $(S, S_1, S_2)$ générés par chaque piste lumineuse et s'étendant sur plusieurs points d'image du capteur en ligne pour qu'ensuite chaque cluster de signaux $(S, S_1, S_2)$ soit comparé avec une impulsion de référence prédéfinie $(R)$ pour déterminer la fonction de corrélation, laquelle comparaison s'effectue selon une largeur de pas prédéfinie plus petite que l'étendue du point d'image, la détermination de l'intervalle entre la piste lumineuse de balayage et la piste lumineuse de référence s'effectuant en déterminant l'intervalle entre les deux extrêmes des fonctions de corrélation engendrées par les pistes lumineuses.

6. Procédé selon la revendication 5, **caractérisé en ce que** la détermination de la position des signaux de cluster $(S, S_1, S_2)$ s'effectue par une recherche hiérarchique au cours de laquelle la largeur de pas du balayage des signaux du détecteur avec l'impulsion de référence $(R)$ est plus grande que l'étendue du point d'image et que la mise en évidence du cluster de signaux $(S, S_1, S_2)$, s'effectue par une comparaison à la valeur de seuil du coefficient de corrélation déterminé.

7. Procédé selon la revendication 5, **caractérisé en ce que** la détermination de la position du signal de cluster $(S, S_1, S_2)$ s'effectue au cours d'une première étape d'évaluation par une interpolation des signaux balayés pour chaque point d'image du capteur en ligne (4), signaux des deux transitions clair-obscur des clusters de signaux de la piste lumineuse de référence (9) et de la piste lumineuse de balayage (10) pour générer des signaux de transition clair-obscur quasi analogiques, lesquels signaux interpolés seront, au cours d'une seconde étape d'évaluation, comparés avec une valeur de seuil prédéfinie dans le but de générer des signaux discontinus de haute résolution.

8. Procédé de détermination de la position angulaire absolue du volant de direction d'un véhicule à moteur sur un segment de 360° en utilisant un capteur de l'angle de braquage optoélectronique, selon les étapes suivantes :

   - exposition d'un élément codeur muni d'une ligne de balayage et d'une ligne de référence avec une source lumineuse pour représenter des pistes lumineuses générées par les pistes codeuses sur la surface photosensible d'un capteur en ligne,
   - balayage des pistes lumineuses par le capteur en ligne et
   - activation d'une unité d'évaluation par les signaux de sortie du capteur en ligne en vue de déterminer l'intervalle entre les deux pistes lumineuses constituant la mesure de la position angulaire absolue du volant de direction,

   **caractérisé en ce que**

   - la représentation des pistes lumineuses sur la surface photosensible du capteur en ligne se fasse de telle manière qu'au moins une caractéristique des deux pistes lumineuses s'étende sur plusieurs points d'image du capteur en ligne, et
   - que pour déterminer l'intervalle entre les signaux correspondants à la piste lumineuse de balayage et à la piste lumineuse de référence, on détermine les centres de gravité des clusters de signaux générés par chaque piste lumineuse et d'étendant sur plusieurs points d'image du capteur en ligne et qu'on détermine ensuite l'intervalle entre les deux centres de gravité.

9. Procédé selon l'une des revendications 1 à 8, **caractérisé en ce qu'**une compensation du jeu sur l'axe et de l'excentricité du disque codeur (3) s'effectue en calculant la moyenne de valeurs angulaires préalablement déterminées de deux capteurs en ligne (4, 19) exposés à la lumière et diamétralement opposés l'un à l'autre.

10. Capteur optoélectronique d'angle de braquage pour déterminer la position angulaire absolue du volant de direction d'un véhicule à moteur sur un segment de 360° comprenant un disque codeur (3) avec une ligne de balayage (8) et une ligne de référence (7) et un dispositif capteur conçu sous la forme d'un capteur en ligne (4), lequel disque codeur (3) bouge de manière relative par rapport au capteur en ligne (4) en fonction de la rotation du volant de direction et est exposé par une face à la lumière de manière à ce que les pistes codeuses (7, 8) soient représentées sur la surface photosensible du capteur en ligne (4) et détectables par celui-ci, lequel capteur en ligne (4) est raccordé, pour déterminer les pistes lumineuses (9, 10) saisies, à une unité d'évaluation électronique pour déterminer l'intervalle des deux pistes lumineuses (9, 10) l'une par rapport à l'autre, donnant la mesure pour la position angulaire absolue du volant de direction, **caractérisé en ce que** les pistes lumineuses (9, 10) de la ligne de référence (7) et de la ligne de balayage (8) générées par l'exposition à la lumière du disque codeur (3) présentent, lors de leur représentation sur le capteur en ligne (4), un manque de netteté, s'étendant sur plusieurs points d'image (4') dans la transition clair-obscur, entre la zone claire d'une piste lumineuse (9, 10) et les zones sombres voisines et que l'unité d'évaluation (5) activée par les signaux du capteur en ligne (4) présente un dispositif pour déterminer une valeur de référence correspondant à une piste lumineuse (9, 10) en exploitant la transition clair-obscur (11, 11', 12) s'étendant sur plusieurs points d'image (4') avec une résolution locale discrète d'une précision au sous-pixel près par rapport à l'étendue du capteur en ligne (4) ainsi qu'un dispositif pour déterminer l'intervalle entre les deux valeurs de référence déterminées, sachant que le dispositif pour déterminer cet intervalle comprend un interpolateur (13) pour générer un signal (17) interpolé à partir du signal de ligne local et discret balayé point d'image par point d'image, un comparateur (14) pour comparer le signal (17) interpolé avec une valeur de seuil (18) prédéfinie pour générer des signaux discontinus, ainsi qu'une logique d'évaluation (15) pour déterminer l'intervalle (A) du signal discontinu correspondant au signal de référence et au signal de balayage.

11. Capteur optoélectronique de l'angle de braquage selon la revendication 10, **caractérisé en ce que** la logique d'évaluation (15) soit cadencée à des fins de suréchantillonnage des signaux du capteur en ligne selon une fréquence prédéfinie, qui est plus élevée que la fréquence des pixels du capteur en ligne (4).

12. Capteur optoélectronique de l'angle de braquage selon la revendication 11, **caractérisé en ce que** la transition clair-obscur (11, 11', 12) d'une piste lumineuse (9, 10) s'étende dans une zone de 10 - 90 % de la transition sur 3 à 10 pixels et notamment sur 5 - 7 pixels.

13. Capteur optoélectronique de l'angle de braquage selon la revendication 10 ou 12, **caractérisé en ce que** le capteur en ligne (4) en l'occurrence les points d'image (4') et un micro-contrôleur affecté à l'unité d'évaluation (5) fonctionnent de manière synchronisée, au niveau des pixels.

14. Capteur optoélectronique de l'angle de braquage selon l'une des revendications 10 à 13, **caractérisé en ce que** le taux de suréchantillonnage des signaux du capteur en ligne corresponde à une fréquence 16 x, avec laquelle le capteur en ligne (4), en l'occurrence les différents pixel (4') sont cadencés et que le capteur en ligne (4) possède un intervalle signal-bruit (RSB) d'au moins 30 dB.

15. Capteur optoélectronique de l'angle de braquage selon l'une des revendications 10 à 14, **caractérisé en ce que** la ligne de référence (7) soit une ligne concentrique, disposée sur la zone périphérique du disque codeur (3) et que la ligne de balayage (8) soit une spirale d'Archimède qui s'agrandit de l'intérieur vers l'extérieur avec une spire s'étendant sur 360°.

16. Capteur optoélectronique de l'angle de braquage selon l'une des revendications 10 à 15, **caractérisé en ce que** l'élément codeur soit disposé sur un cylindre, qui est placé de manière coaxiale par rapport à l'axe de rotation de l'arbre de direction.

17. Capteur optoélectronique de l'angle de braquage selon la revendication 16, **caractérisé en ce que** la ligne de référence soit un cercle avec rayon perpendiculaire à l'axe de direction et que la ligne de balayage soit une ligne de vis avec un même rayon.

18. Capteur optoélectronique de l'angle de braquage selon une ou plusieurs des revendications 10 à 17, **caractérisé en ce qu'**un second capteur en ligne (19), exposé à une source lumineuse, diamétralement opposé au premier capteur en ligne (4) et dont l'axe longitudinal est aligné avec l'axe longitudinal du premier capteur en ligne (4) soit affecté au premier capteur de l'angle de braquage.

*Fig. 1*

*Fig. 2*

**Fig. 3**

3

1

4

16

13

14

5

15

EP 0 991 918 B1

Abtastspur

Referenzspur

A

**Fig. 4**

**18**

n=1

**17**

| Ergebnis der Subpixelberechnung |

| per Schwellwert detektierte Kante |

1 Pixel

X

*Fig. 5*

*Fig. 6*

**Fig. 7**

*Fig. 8*

*Fig. 9*